# EUROPÄISCHE PATENTSCHRIFT

(11) **EP 2 291 851 B1**
(45) Veröffentlichungstag und Bekanntmachung des Hinweises auf die Patenterteilung: **09.08.2017**
(21) Anmeldenummer: 09768895.6
(22) Anmeldetag: 03.06.2009
(51) Int. Cl.: H01F 7/16, F16K 31/06

(54) **BETÄTIGUNGSVORRICHTUNG**
ACTUATING DEVICE
DISPOSITIF D'ACTIONNEMENT

(30) Priorität: 26.06.2008 DE 102008030452
(43) Veröffentlichungstag der Anmeldung: 09.03.2011
(73) Patentinhaber: Hydac Electronic GmbH, 66128 Saarbrücken (DE)
(72) Erfinder: BILL, Martin, 66625 Nohfelden (DE); LAUER, Florian, 66571 Eppelborn (DE)
(74) Vertreter: Bartels, Martin Erich Arthur
(86) Internationale Anmeldenummer: PCT/EP2009/003938
(87) Internationale Veröffentlichungsnummer: WO 2009/156046

(56) Entgegenhaltungen:
- EP-A- 0 576 813
- DE-A1- 4 210 740
- DE-A1-102004 028 871
- US-A1- 2003 136 931

## Beschreibung

Die Erfindung betrifft eine Betätigungsvorrichtung, insbesondere zum Betätigen von außenseitig anschließbaren Ventilen gemäß der Merkmalsausgestaltung des Oberbegriffes des Patentanspruches 1

Dahingehende Betätigungsvorrichtungen, die man fachsprachlich auch als Schalt- oder Betätigungsmagnete bezeichnet, sind beispielhaft in der DE 101 04 998 A1 beschrieben und auf dem Markt in einer Vielzahl von Ausführungsformen frei erhältlich. Das Betätigungsteil des Schaltmagneten ist im wesentlichen aus einem rohrförmigen Bolzen gebildet, der bei elektrischer Erregung der Spulenwicklung über einen an die Steckerplatte eines Anschlußsteckers anschließbaren Gerätesteckers eine vorgebbare Wegstrecke zurücklegt und hierbei einen Schalt- oder Betätigungsvorgang auslöst, beispielsweise bei einem Ventil zum Absperren und Führen von Fluidströmen. Entfällt die Bestromung, ist der Schaltmagnet also stromlos, wird regelmäßig über eine Rückstellfeder, die in der Betätigungsvorrichtung selbst und/oder am zu schaltenden Ventil angeordnet ist, für einen erneuten Schaltvorgang bei Bestromen der Spule der Magnetanker rückgestellt.

Trotz abgeschaltetem Strom kann es jedoch aufgrund von Restmagnetisierung, betreffend den Polkern und den Magnetanker sowie von weiteren magnetisierbaren Teilen aufseiten des Polkerns, wie einer Polplatte, zum Anhaften des Magnetankers am Polkern kommen und um das dahingehende Antihaften vermeiden zu helfen, ist es im Stand der Technik bekannt, zwischen den einander benachbart gegenüberliegenden Seiten von Magnetanker und Polkern eine Antihafteinrichtung, insbesondere in Form einer Antihaftscheibe, vorzusehen, die fachsprachlich auch Antiklebscheibe genannt wird und die mit einem vorgebbaren radialen Abstand das stangenartige Betätigungsteil umfaßt. Da die dahingehende Antihaftscheibe aus einem nichtmagnetischen Material besteht, sind durch Restmagnetismus bedingte Anhaftvorgänge weitestgehend vermieden und bei einer Abschaltung des Stromes findet verzögerungsfrei eine Bewegung des Magnetankers durch das stangenartige Betätigungsteil statt.

Durch die DE 10 2004 028 871 A1 ist eine Betätigungsvorrichtung, insbesondere zum Betätigen von außen her anschließbaren Ventilen, bekannt mit einem Gehäuse und einem darin angeordneten Spulenkörper mit Spulenwicklung, der zumindest teilweise ein Polrohr umfaßt, an dessen einem freien Ende sich ein Polkern anschließt, und mit einem zumindest im Polrohr innerhalb eines Ankerraumes geführten Magnetanker, der mit einem Betätigungsteil für das Betätigen des jeweiligen Ventils versehen ist, das den Polkern entlang eines Führungskanals durchgreift. Dadurch, dass die Außenumfangsgestalt des stangenartigen Betätigungsteils zur Innenumfangsgestalt des Führungskanals derart gewählt ist, dass mindestens eine fluidführende Verbindung von außen zum Ankerraum hergestellt ist, kann auf zusätzlich anzubringende Fluid- oder Durchgangsbohrungen im Polkern verzichtet werden, was bei der bekannten Lösung Herstellkosten senken und zum anderen Bauraum einsparen hilft.

Bei dieser bekannten Lösung ist die Querschnittsfläche des Führungskanals von bogenförmigen und/oder geradlinig verlaufenden Wandsegmenten begrenzt, wobei die Querschnittsfläche des stangenartigen Betätigungsteils hiervon abweichend unter Bildung der jeweiligen fluidführenden Verbindung von geradlinigen und/oder bogenförmigen weiteren Wandsegmenten begrenzt ist, und wobei zumindest teilweise die weiteren Wandsegmente an den Wandsegmenten des Führungskanals beim Bewegen des Betätigungsteils geführt sind. Aufgrund dieser Fluidmedienverbindung ist ein störungs- und hemmfreier Betrieb sowohl der Ventileinrichtung als auch der Betätigungsvorrichtung selbst möglich. Aufgrund der herzustellenden Querschnittsflächen mit ihren teilweise komplizierten Geometrien sind aber der Herstellaufwand und mithin die Herstellkosten erhöht. Im übrigen weist das aus einem Metallwerkstoff bestehende Betätigungsteil ein relativ hohes Einsatzgewicht auf, das dem raschen Ansteuern für einen Betätigungs- oder Schaltvorgang entgegensteht. Ferner ist das stangenartige Betätigungsteil über ein vorstehendes Zentriermittel in der Art einer losen Kupplungsstelle mit der Stirnseite des Magnetankers verbunden, was zwar den Vorteil hat, dass es beim Verfahren von Betätigungsteil mit Magnetanker nicht zu Verkantungen und mithin Hemmnissen im Betrieb kommt; allein die dahingehende Verbindungsstelle ist wiederum kompliziert in der Herstellung und insoweit kostenintensiv.

Durch die EP-A-0 576 813, die den Oberbegriff des Anspruchs 1 offenbart, ist eine gattungsgemäße Betätigungsvorrichtung bekannt, insbesondere zum Betätigen von außenseitig anschließbaren Ventilen, mit einem Gehäuse und einem darin angeordneten Spulenkörper mit Spulenwicklung, der zumindest teilweise ein Polrohr umfaßt, an dessen einem freien Ende sich ein Polkern anschließt, mit einem zumindest im Polrohr innerhalb eines Ankerraumes längsverfahrbar geführten Magnetanker, der mit einem Betätigungsteil für das Betätigen des jeweiligen Ventilteils zusammenwirkt, wobei das Betätigungsteil zumindest teilweise aus einem spritzbaren Material gebildet ist, das in einem Verbindungsbereich an den Magnetanker angespritzt ist, wobei an der Stirnseite des Magnetankers, die dem Polkern zugewandt ist, eine Antihafteinrichtung, insbesondere in Form einer Antihaftscheibe, angeordnet ist.

Mit der bekannten Lösung ist es möglich, in die zentrale Bohrung des Magnetankers eine leicht und einfach herstellbare Stange als Betätigungsteil einzuspritzen, wobei die Betätigungsstange exakt im Magnetanker zentriert ist. Sofern zusammen mit der Betätigungsstange exakt bemessene Antiklebscheiben stirnseitig am Magnetanker mit angespritzt sind oder später durch Aufschieben an die Betätigungsstange angebracht sind, ist ein magnetisches Haften des Ankers nach Abschalten eines Stromes der Spulenwicklung verhindert und die bekannte Lösung lässt sich mit wenig Montageschritten einfach und kostengünstig herstellen.

Bei Abschalten des Stromes in der Spulenwicklung ist innerhalb des Gehäuses der Betätigungsvorrichtung jedoch kein Rückstellmittel vorgesehen, das eine Rückstellung des Magnetankers mit Betätigungsstange in den Ursprungszustand erlauben würde; insoweit ist eine Rückstellung von außen her, beispielsweise über ein an die Betätigungsvorrichtung angeschlossenes Ventil, zu veranlassen. Die dahingehende Rückstellung über ein externes Rückstellmittel führt aber regelmäßig zu entsprechend hohen Schalt- und Reaktionszeiten, so dass sich ausgesprochen hohe Lastwechsel nur schwer erreichen lassen.

Ausgehend von diesem Stand der Technik liegt der Erfindung die Aufgabe zugrunde, die bekannten Betätigungsvorrichtungen unter Beibehalten ihrer Vorteile, nämlich den Herstellaufwand und mithin die Herstellkosten zu reduzieren bei gleichzeitiger Reduzierung des Einsatzgewichtes der bewegbaren Komponenten, dahingehend weiter zu verbessern, dass sich sehr rasche Ansteuervorgänge bei sehr kurzen Schalt- und Reaktionszeiten erreichen lassen. Ferner sollen sich mit der erfindungsgemäßen Lösung auch Pneumatik-Ventile mit vergleichbarer Aufgabenstellung ansteuern lassen.

Eine dahingehende Aufgabe löst eine Betätigungsvorrichtung mit den Merkmalen des Patentanspruches 1 in seiner Gesamtheit. Dadurch, dass gemäß dem kennzeichnenden Teil des Patentanspruches 1 die Antihafteinrichtung zumindest teilweise eine Anlagefläche für das eine Ende eines Kraftspeichers ausbildet, der mit seinem anderen Ende sich am Polkern abstützt oder dass zwischen der Antihafteinrichtung und dem Umfang des Betätigungsteils eine ringförmige Anlagestufe für den Angriff des genannten Kraftspeichers angeordnet ist, ist bei nicht bestromtem Magnet dessen Rückstellbewegung, beispielsweise in die nicht betätigte Offenstellung, über das Rückstellmittel in Form des Kraftspeichers gewährleistet, der innerhalb der Betätigungsvorrichtung direkt an der Antihafteinrichtung angreift, um dergestalt sehr kurze Schalt- und Reaktionszeiten zu gewährleisten, die notwendig sind, sehr hohe Lastwechsel ermöglichen zu können.

Das Betätigungsteil ist zumindest teilweise aus einem spritzbaren Material gebildet, das in einem Verbindungsbereich an den Magnetanker angespritzt ist. Dergestalt ist eine direkte Anbindung von Betätigungsteil mit dem Magnetanker erreicht und auf aufwendig herzustellende Kupplungsstellen kann verzichtet werden, unabhängig davon, ob diese lose oder feststehend ausgebildet sind, beispielsweise indem das Betätigungsteil mit der Stirnseite des Magnetankers als Verbindungsbereich über eine Eingriffsgewindestrekke verbunden ist. Da auf die bekannten Kupplungsverbindungen verzichtet werden kann und das Betätigungsteil direkt an die Stirnseite des Magnetankers angespritzt ist, ist Einsatzgewicht gespart, so dass sich mit der Betätigungsvorrichtung sehr schnelle Ansteuervorgänge durchführen lassen, so dass die Betätigungsvorrichtung auch für schnell schaltende Pneumatik-Ventile geeignet ist. Da das Betätigungsteil gespritzt wird, lassen sich in herstelltechnisch einfacher Weise nahezu beliebige Geometrien für das Betätigungsteil erzeugen, ohne dass man hierfür auf aufwendige spanende Bearbeitungsvorgänge zurückgreifen müßte. Etwaige Gestaltungsgrenzen sind bei der erfindungsgemäßen Lösung nur insoweit dann vorgegeben, als eben eine Ausformbarkeit aus der Spritzform zu gewährleisten ist. Sofern im Sinne der erfindungsgemäßen Lösung von Spritz- oder Spritzgießvorgängen die Rede ist, schließen die dahingehenden Begriffe auch technische Lösungen mit ein, wie Gießverfahren, beispielsweise im Umfang von Druckguß, Schleuderguß etc..

Grundsätzlich lassen sich alle spritzbaren Materialien einsetzen, die eine gute Verbindung mit dem Magnetanker im genannten Verbindungsbereich eingehen und die entsprechende Laufeigenschaften aufweisen, damit das Betätigungsteil hemmfrei sich innerhalb der Betätigungsvorrichtung hin und her bewegen kann. Bevorzugt wird jedoch als spritzbares Material ein Kunststoff eingesetzt, insbesondere in Form eines thermoplastischen Kunststoffes. Insbesondere haben sich Kunststoffe als geeignet erwiesen, die beim Anspritzen oder Spritzgießvorgang bei Massetemperaturen von 230° bis 270° C zu verarbeiten sind, wie beispielsweise Polybutylenterephthalat (BPT). Bei einer bevorzugten Ausführungsform der erfindungsgemäßen Betätigungsvorrichtungslösung ist das Betätigungsteil von einem Mittenkanal durchgriffen, der an den beiden gegenüberliegenden Stirnseiten des Betätigungsteils in die Umgebung mündet, wobei vorzugsweise der Mittenkanal mindestens einen Querkanal aufweist, der in einen Mittenraum innerhalb der Vorrichtung austritt, der gegenüber der Umgebung abgedichtet ist. Auf diese Art und Weise lassen sich zum Druckausgleich Medienanteile des Pneumatik-Ventils druckausgleichend in die Betätigungsvorrichtung einbringen, beispielsweise in Form von Betätigungsluft für das PneumatikVentil. Der Einsatz der erfindungsgemäßen Betätigungsvorrichtung ist jedoch nicht auf das Gebiet der Pneumatik-Ventile eingeschränkt, sondern kann grundsätzlich für jedes Fluidventil zum Einsatz kommen, also auch für die üblichen Hydraulik-Ventillösungen verwendet werden.

Vorzugsweise ist dabei ferner vorgesehen, dass das Betätigungsteil eine Mittenöffnung des Magnetankers durchgreift, die von Anlageflächen des Magnetankers begrenzt ist, die voneinander beabstandet zumindest teilweise Anspritzflächen für das Betätigungsteil ausbilden. Sofern bevorzugt die zwischen Polkern und Magnetanker angeordnete Anspritzfläche mindestens eine Vertiefung im Magnetanker aufweist, die vorzugsweise eine Hinterschnittgestaltung ausbildet, läßt sich in formfester Weise die Anbindung von Betätigungsteil an den Magnetanker erreichen. Sofern man in diesem Bereich der Anbindung das spritzbare Material des Betätigungsteil flanschartig und in radialer Weise nach außen erweitert, läßt sich dergestalt eine Antihafteinrichtung ausbilden, die einstückiger Bestandteil des Betätigungsteils ist und sicher die Entkopplung von Polkern zu Magnetanker vornimmt. Die insoweit vorzugsweise aus einem Kunststoffmaterial gebildete Antihafteinrichtung wirkt auch dämpfend im Falle einer Anschlagbetätigung des Magnetankers auf die zugewandte Seite des Polkerns.

Im folgenden wird die erfindungsgemäße Ausführungsform anhand von Ausführungsbeispielen nach der Zeichnung näher erläutert. Dabei zeigen in prizipieller und nicht maßstäblicher Darstellung die
- Fig. 1: in der Art eines Längsschnittes die Betätigungsvorrichtung als Ganzes, jedoch ohne angeschlossene Ventileinrichtung;
- Fig.2: einen vergrößerten Ausschnitt gemäß Kreisdarstellung D in Fig.1;
- Fig.3: in der Art eines Längsschnittes einen Teil der Herstellform betreffend den Anspritzvorgang eines Betätigungsteils an den Magnetanker der Betätigungsvorrichtung;
- Fig.4a,4b und 4c: im Längsschnitt, in perspektivischer Draufsicht sowie in Vorderansicht eine gegenüber den Fig.1 bis 3 geänderte zweite Ausführungsform einer Anspritzlösung;
- Fig. 5a,5b und 5c: in entsprechender Darstellung zu den Fig.4a, 4b und 4c eine dritte Ausführungsform einer Anspritzlösung;
- Fig.6a,6b,6c: eine zu den Fig.4a, 4b und 4c entsprechende Darstellung einer vierten Ausführungsform der Anspritzlösung;
- Fig.7: einen vergrößerten Ausschnitt gemäß Kreisdarstellung A in Fig.1;
- Fig.8: einen vergrößerten Ausschnitt gemäß Kreisdarstellung B in Fig.1;
- Fg.9: einen vergrößerten Ausschnitt gemäß Kreisdarstellung C in Fig.1;
- Fig.10 und 11: in der Art einer Längsschnittdarstellung die einzelnen Herstellschritte für die Detaillösung gemäß Kreisdarstellung C nach Fig.9.

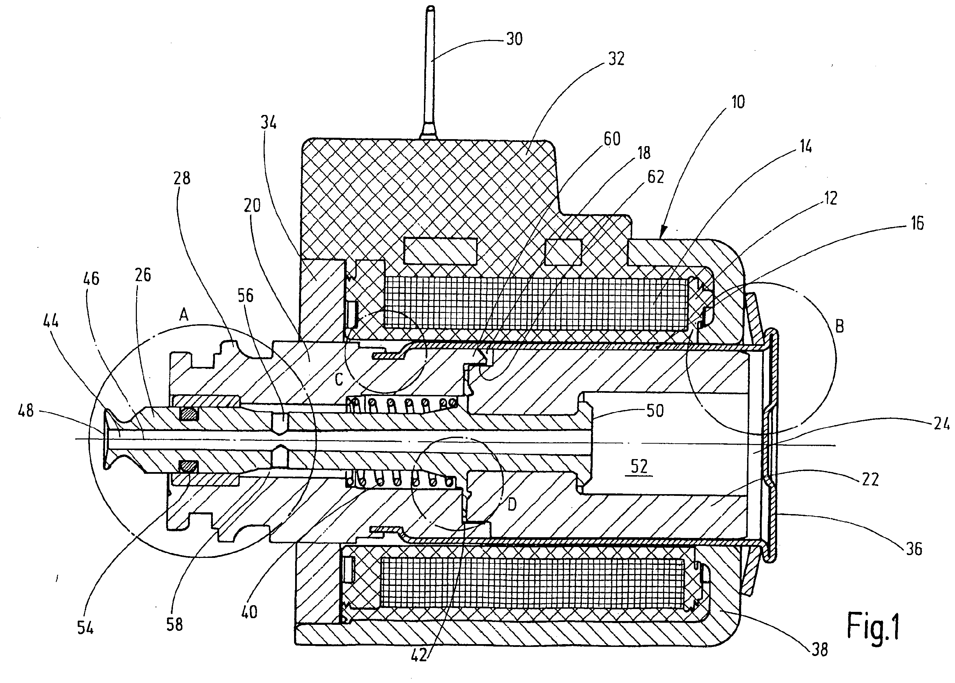

Die in der Fig.1 im Längsschnitt dargestellte Betätigungsvorrichtung, die man in der Fachsprache auch mit "Betätigungs- oder Schaltmagnet" bezeichnet, weist ein als Ganzes mit 10 bezeichnetes Gehäuse auf mit einem darin angeordneten Spulenkörper 12 mit Spulenwicklung 14. Der dahingehende Spulenkörper 12 umfaßt zumindest teilweise ein Polrohr 16, das mittels einer Trennstelle 18 in Form einer freigelassenen Stelle magnetisch von einem Polkern 20 im wesentlichen entkoppelt ist. Es sind im Stand der Technik aber auch Lösungen (nicht dargestellt) bekannt, bei denen eine korrespondierende Trennstelle durch eine Schweißnaht od. dgl. gebildet ist. Längs des Polrohres 16 ist ein Magnetanker 22 in einem Ankerraum 24 längsverfahrbar geführt, der an seinem einen freien, stirnseitigen Ende mit einem stangenartigen Betätigungsteil 26 zusammenwirkt zum Betätigen von Fluidventilen (nicht dargestellt) üblicher Bauart, insbesondere in Form von nicht näher dargestellten Pneumatik-Ventilen. Zum Anschließen eines dahingehenden Ventils ist der Polkern 20 an seinem freien Ende mit einem Anschlußflansch 28 versehen. Der Anschlußflansch 28 weist an seinem Außenumfang vertiefte Ringnuten auf zur zumindest teilweisen Aufnahme von entsprechenden Elastomer-Dichtringen und zum Führen von Medienströmen.

Zum Bestromen der Spulenwicklung 14 des Spulenkörpers 12, die bevorzugt aus mindestens einem leitfähigen Kupferdraht besteht, ist ein Stekerteil 30 vorgesehen, das vorzugsweise über eine Vergußmasse 32 mit den sonstigen Gehäuseteilen des Gehäuses 10 fest verbunden ist. In Blickrichtung auf die Fig.1 gesehen ist auf der linken Seite und nach außen hin mit der Vergußmasse 32 abschließend eine ringförmigen Polplatte 34 eingesetzt, die für ihren festen Halt im Gehäuse 10 mit diesem entsprechend verstemmt ist (nicht dargestellt). Im übrigen umfaßt die Polplatte 34 den Außenumfang des Polkerns 20, der insoweit über die nicht näher dargestellte Ventileinrichtung in seiner in der Fig.1 gezeigten Einbaulage in der Betätigungsvorrichtung gehalten ist. Das Polrohr 16 ist topfartig in der Art einer Aufnahmehülse ausgebildet und das Bodenteil 36 des Polrohres 16 bildet insoweit eine Anschlagbegrenzung für den Magnetanker 22 in seiner in Blickrichtung auf die Fig.1 gesehen äußerst rechten Verfahrstellung aus. Die Vergußmasse 32 nebst Spulenkörper 12 bestehen aus einem Kunststoffmaterial, beispielsweise Polyamid, vorzugsweise aus PA6. Die Vergußmasse 32 auf der Oberseite der Betätigungsvorrichtung greift entlang ihrer Unterseite in Ausnehmungen eines topfartigen Gehäusemantels 38 ein, der gleichfalls Bestandteil des Gehäuses 10 ist. Sowohl Gehäusemantel 38 als auch Magnetanker 22 sowie Polkern 20 und Polplatte 34 bestehen aus einem metallischen Material, wobei alle genannten Teile aus demselben Material bestehen können. Das Polrohr 16 ist bevorzugt aus einem Edelstahlmaterial erstellt, das in Abhängigkeit des Einsatzzweckes magnetisch leitend oder nichtleitend ausgebildet sein kann.

Wird über das Steckerteil 30 die Spulenwicklung 14 und mithin die Spule bestromt, wird der Magnetanker 22 in seine in der Fig.1 gezeigte betätigte Stellung verfahren, also in Blickrichtung auf die Fig.1 gesehen von einer rechten Stellung in eine linke, die insoweit der Betätigungsstellung nach der Fig.1 entspricht. Bei der dahingehenden Verfahrbewegung nimmt der Magnetanker 22 das stangenförmige Betätigungsteil 26 mit, dessen freies Ende für einen Betätigungsvorgang an dem nicht näher dargestellten PneumatikVentil in jeder seiner Verfahrstellungen aus dem Gehäuse 10 und insbesondere aus dem Polkern 20 herausragt. Bei der dahingehenden Verfahrbewegung des Magnetankers 22 in Blickrichtung auf die Fig.1 gesehen nach links wird ein Energiespeicher in Form einer Druckfeder 40 vorgespannt und sobald die Spulenwicklung 14 stromlos gehalten ist, schiebt die vorgespannte Druckfeder 40 den Magnetanker 22 in seine rechte Ausgangsstellung zurück, bei der er auch in Anlage mit der Innenseite des Bodenteils 36 des Polrohres 16 kommen kann. Im dahingehend stromlosen Zustand ist die angeschlossene Ventileinrichtung stromlos offengeschaltet. Bei einer geänderten Ausführungsform (nicht dargestellt) der erfindungsgemäßen Betätigungsvorrichtung könnte es auch vorgesehen sein, den Energiespeicher in Form der Druckfeder 40 in die angeschlossene Ventileinrichtung zu verlegen, um dergestalt die angesprochene Rückstellbewegung für den Magnetanker 22 nebst Betätigungsteil 26 zu veranlassen.

Selbst bei Wegfall des Stromes kann es aber aufgrund von Restmagnetismusvorgängen im Polkern 20 und in der Polplatte 34 dazu kommen, dass der Magnetanker 22 mit seiner einen freien Stirnseite an der ihm zugewandten benachbarten Stirnseite des Polkerns 20 haften bleibt. Um dies zu vermeiden, wird zwischen die beiden Stirnseiten innerhalb des Ankerraumes 22 eine Antihafteinrichtung 42 eingesetzt, die mit einem radialen Abstand das stangenartige Betätigungsteil 26 umfaßt, um so wirksam eine Entkopplung vorzunehmen. Das stangenartige Betätigungsteil 26 ist von einem Mittenkanal 44 durchgriffen, der sich entlang der Längsachse 46 von Magnetanker 22 und Betätigungsteil 26 erstreckt, die insoweit auch die mögliche Verfahrachse bildet. Der genannte Mittenkanal 44 tritt an den beiden gegenüberliegenden Stirnseiten 48,50 des Betätigungsteils 26 in die Umgebung aus. Insbesondere mündet der Mittenkanal 44 auf der rechten Stirnseite 50 des Betätigungsteils 26 in einen Freiraum 52 des Magnetankers 22 aus, wobei der Freiraum 52 insoweit druck- und medienführend wiederum in den Ankerraum 24 ausmündet. Im Bereich zwischen einer Dichtungsstelle 54, die insoweit auch eine Führung ausbildet für das vordere Ende der Betätigungsstange 26, und dem Magnetanker 22 ist ein Querkanal 56 vorhanden, der mit seinem einen Ende in den Mittenkanal 44 ausmündet und mit seinem anderen Ende in einen Mittenraum 58 austritt, der von dem Polkern 20 umfaßt ist.

Die Komponenten Mittenkanal 44, Querkanal 56, Mittenraum 58, Freiraum 52 sowie Ankerraum 24 bilden eine Art Druckausgleichssystem aus, das an die nicht näher dargestellte Ventileinheit angeschlossen ist und insofern von der Ventileinheit kommende Druckmedien dergestalt kompensiert, dass die Verfahrbewegung des Magnetankers 22 nebst Betätigungsteil 26 durch etwaige Druckdifferenzen nicht beeinträchtigt ist. Gegebenenfalls können die derart geführten Druckmedien auch aufgrund unterschiedlicher Flächenverhältnisse die aufzubringende Betätigungskraft seitens des Magnetankers 22 wirksam mit unterstützen. Im Bereich der Trennstelle 18 übergreift der Polkern 20 mit einem nasenartigen Ringvorsprung 60 die in diesem Bereich abgesetzte Stufung 62 des Magnetankers 22 derart, dass in jeder Verfahrstellung des Magnetankers 22 dieser innerhalb des Ringvorsprunges 60 geführt ist, so dass sich die Größe der Trennstelle 18 je nach Verfahrrichtung des Magnetankers 22 ändert.

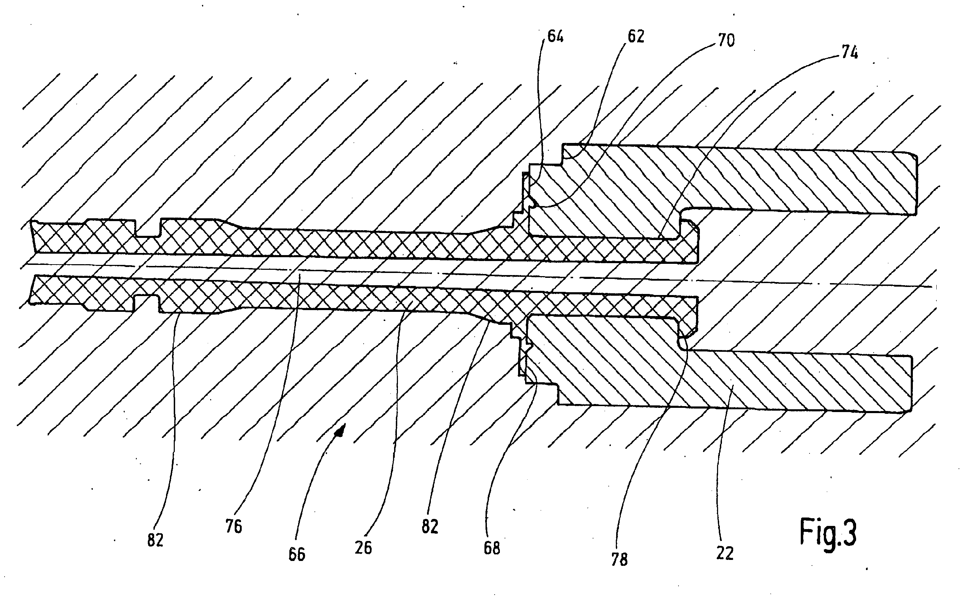

Das stangenartige Betätigungsteil 26 ist aus einem spritzbaren Material gebildet, das insbesondere gemäß Darstellung nach der Fig.3 in einem Verbindungsbereich 64 an den Magnetanker 22 angespritzt ist. Sofern hier von Anspritzen die Rede ist, schließt dies die üblichen Spritz-, Gieß- und Druckgießverfahren mit ein. Das spritzbare Material des Betätigungsteils 26 kann dem Grunde nach jedes derart verarbeitbare Material sein. Vorzugsweise wird jedoch ein Kunststoffmaterial eingesetzt, insbesondere ein thermoplastisch verarbeitbarer Kunststoff. Als besonders vorteilhaft hat sich der Einsatz von Polybutylenterephthalat (PBT) erwiesen, das ein Spritzgießen bei Massetemperaturen von 230°C bis 270°C erlaubt. Das eingesetzte Kunststoffmaterial weist die notwendige Festigkeit und Steifigkeit auf und das Gleit- und Verschleißverhalten hat sich in praktischen Versuchen für die hier vorliegende Anwendung als sehr gut erwiesen. Im vorliegenden Ausführungsbeispiel ist das gesamte Betätigungsteil 26 aus einem spritzbaren Kunststoffmaterial gebildet; es besteht hier aber auch die Möglichkeit, das Betätigungsteil 26 im vorderen Bereich aus einem üblichen metallischen Stangenwerkstoff zu bilden, der dann nur im Übergangsbereich zum Magnetanker 22 mittels spritzbarem Material angespritzt ist.

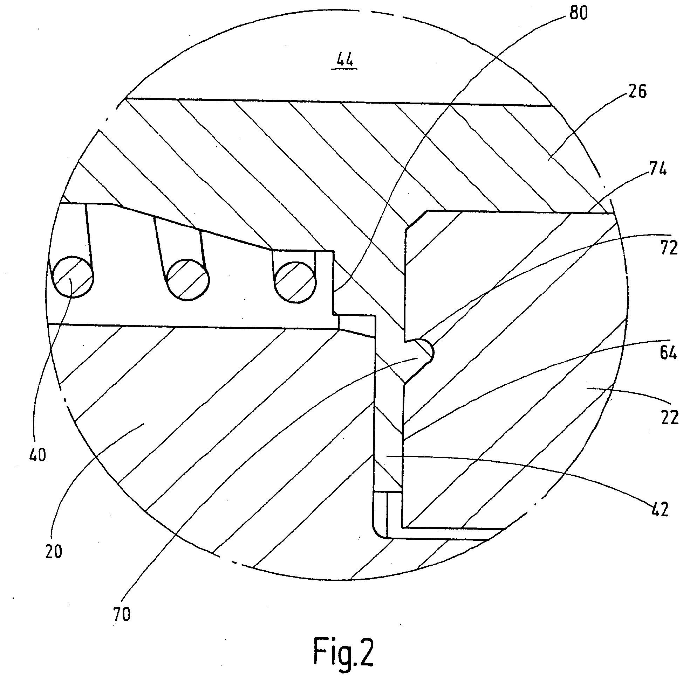

In der Fig.3 ist eine als Ganzes mit 66 bezeichnete Spritzgußform teilweise und von ihrem prinzipiellen Aufbau her dargestellt. Für einen Entformvorgang ist die dahingehende Spritzgußform 66 mehrteilig ausgebildet (nicht dargestellt) und läßt sich insoweit mit ihren Teilen zur Gesamtform gemäß der Darstellung nach der Fig.3 zusammensetzen. In die Spritzgußform 66 wird der metallische Magnetanker 22 eingelegt, der an seiner einen freien Stirnseite den Verbindungsbereich 64 ausbildet. Die derart gebildete mögliche Anspritzfläche 68 ist nach außen hin durch die Wandung der Spritzgußform 66 begrenzt und derart gewählt, dass diese jedenfalls nicht über die freie Stirnseite des Magnetankers 22 in diesem Bereich vorsteht. Ferner ist innerhalb der Anspritzfläche 68 in die freie Stirnseite des Magnetankers 22 eine umlaufende ringnutartige Vertiefung 70 eingebracht, die in vergrößerter Darstellung in der Fig.2 wiedergegeben ist und eine Art Hinterschnittgestaltung 72 ausbildet, damit das eingespritzte Kunststoffmaterial sich entsprechend unterhakend im Hinterschnitt im Magnetanker 22 entlang des Verbindungsbereichs 64 halten kann. Weiter weist der Magnetanker 22 eine zentral verlaufende Mittenöffnung 74 auf, die von dem Betätigungsteil 26 durchgriffen ist, wobei gemäß der Darstellung nach der Fig.3 ein entsprechend eingelegter Formkern 76 die dahingehende Ausgestaltung ermöglicht. Da die Mittenöffnung 74 in den sich erweiternden Freiraum 52 austritt, ist dort eine weitere Anlagefläche als zweite Anspritzfläche 78 des Magnetankers 22 ausgebildet. Im Bereich der zweiten Anspritzfläche 78 übergreift das Kunststoffmaterial des Befestigungsteils 26 die insoweit gebildete Verbreiterungsstufe, so dass in beiden Verfahrrichtungen des Magnetankers 22 eine sichere Verankerung des Betätigungsteils 26 über den Anspritzvorgang gewährleistet ist.

Die Spritzgußform 66 nach der Fig.3 ist derart ausgebildet, dass das stangenartige Betätigungsteil 26 sich radial nach außen hin verbreitert unter Ausbildung der bereits beschriebenen scheibenartigen Antihafteinrichtung 42. Insoweit ist der Polkern 20 vom Magnetanker 22 sicher entkoppelt und die Antihafteinrichtung 42 bildet auch eine Art Anschlagschutz für den Magnetanker 22 aus. Wie insbesondere die Fig.2 zeigt, ist zwischen der scheibenförmigen Antihafteinrichtung 42 und der sonstigen Umfassungsfront des Betätigungsteils 26 eine Anlagestufe 80 eingebracht, an der sich das eine freie Ende des Kraftspeichers in Form der Druckfeder 40 abstützt. Insoweit ist die eigentliche Antihafteinrichtung 42 von der Krafteinleitung der Druckfeder 40 entlastet, die im übrigen in jeder Verfahrstellung des Magnetankers 22 das stangenartige Betätigungsteil 26 in Richtung des Verbindungsbereiches 64 des Magnetankers 22 drückt. Wie sich des weiteren aus den Fig.1 und 3 ergibt, verjüngt sich der Mittenraum 58 zu beiden Seiten hin, indem das stangenartige Betätigungsteil 26 entlang von zwei Übergangsbereichen 82 sich im Durchmesser konisch verbreitert.

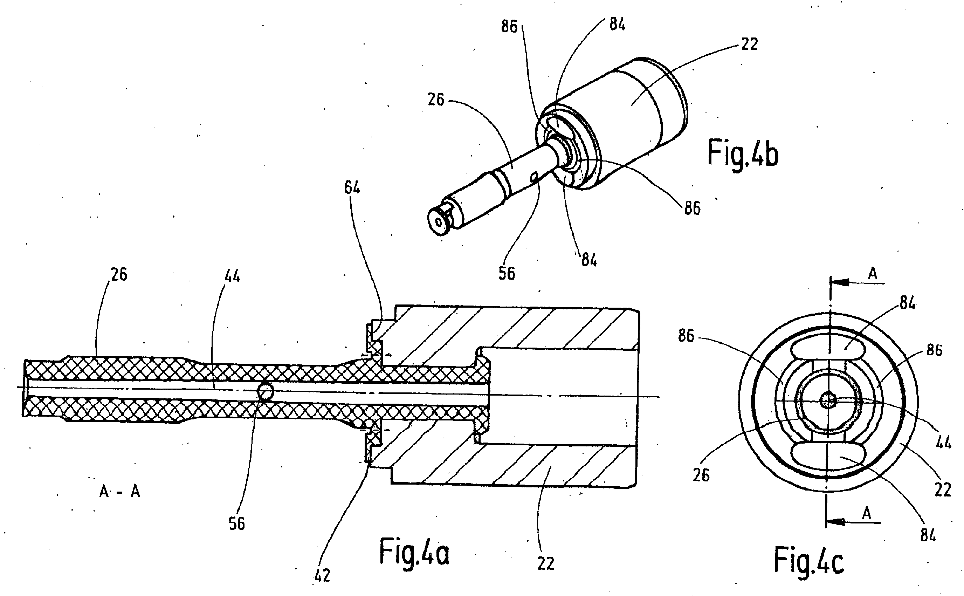

Die Ausführungsform nach der Fig.4 ist jedenfalls insoweit abgeändert, als im Verbindungsbereich 64 das angespritzte Kunststoffmaterial zur Erhöhung der Anbindungsmasse nierenartige Verbreiterungen 84 aufweist, wobei wiederum die Antihafteinrichtung 42 einstückiger Bestandteil des Betätigungsteils 26 ist. Durch die diametral einander gegenüberliegenden ringartigen Vertiefungsstellen 86, die sich kreissegmentartig an die Nieren 84 beidseits anschließen, braucht der Energiespeicher in Form der Druckfeder 40 nicht insgesamt auf dem angespritzten Kunststoffmaterial aufzuliegen, sondern kann sich für eine verbesserte Abstützung an den Metallbereichen des Magnetankers 22 direkt abstützen.

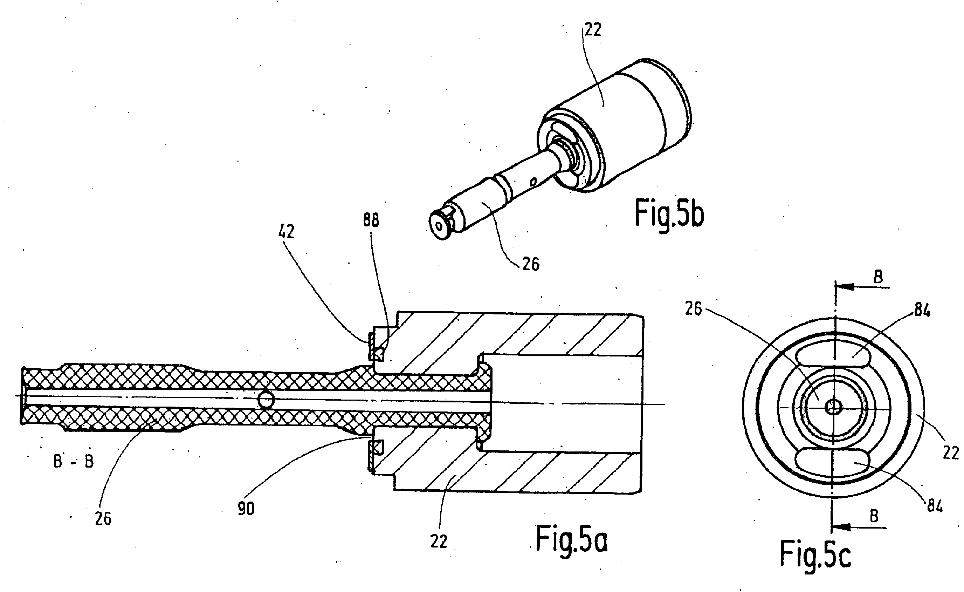

Die Ausführungsform nach den Figuren 5 entspricht vom grundsätzlichen Aufbau her der Ausführungsform nach den Figuren 4; allein ist hier die Antihafteinrichtung 42 als Antiklebscheibe über eine entsprechende Eingreifstelle 88 mit dem Magnetanker 22 stirnseitig fest verbunden. Im dahingehenden Fall liegt die Druckfeder 40 mit ihrem einen Ende direkt an der Stirnseite des Magnetankers 22 an, und zwar im Bereich des Ringspaltes 90, gebildet durch den Zwischenabstand von Außenumfang des Befestigungsteils 26 zum Innenumfang der eigenständig ausgebildeten Antiklebscheibe der Antihafteinrichtung 42.

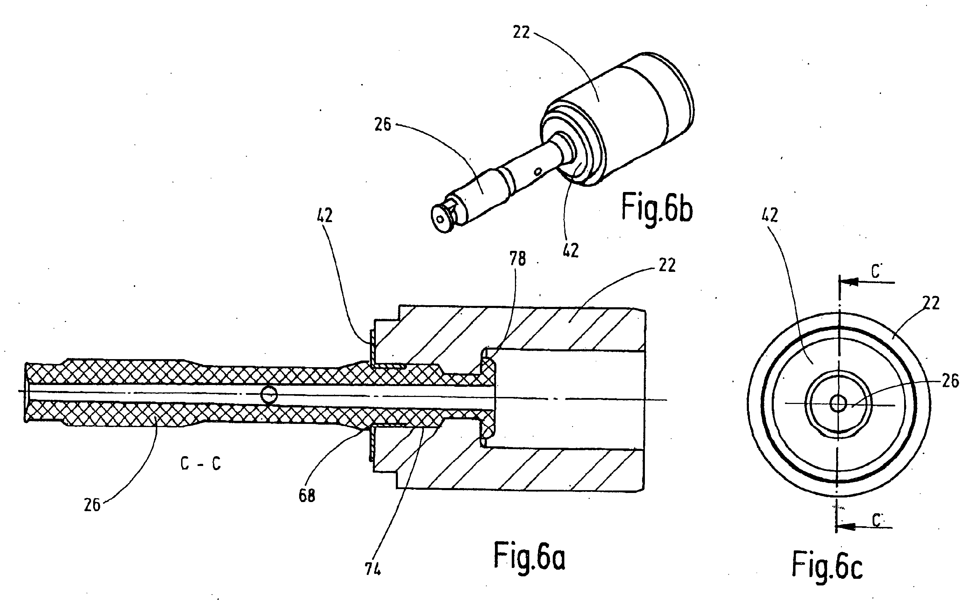

Bei der Ausführungsform nach den Fig.6 wiederum ist die Antihafteinrichtung 42 aus einem Antiklebtopf gebildet, der mit seinem radialen Umfassungsrand an der Stirnseite des Magnetankers 22 anliegt und ansonsten mit seinem zylindrisch eingewölbten Bodenteil in die Mittenöffnung 74 des Magnetankers 22 eingreift. Insoweit liegt das Betätigungsteil 26 mit seinem anspritzbaren Kunststoffmaterial nur im Bereich der zweiten Anspritzfläche 78 direkt am Magnetanker 22 an und die erste Anspritzfläche 68 ist gebildet durch die Anlage an die Oberseite der genannten Antihafteinrichtung 42.

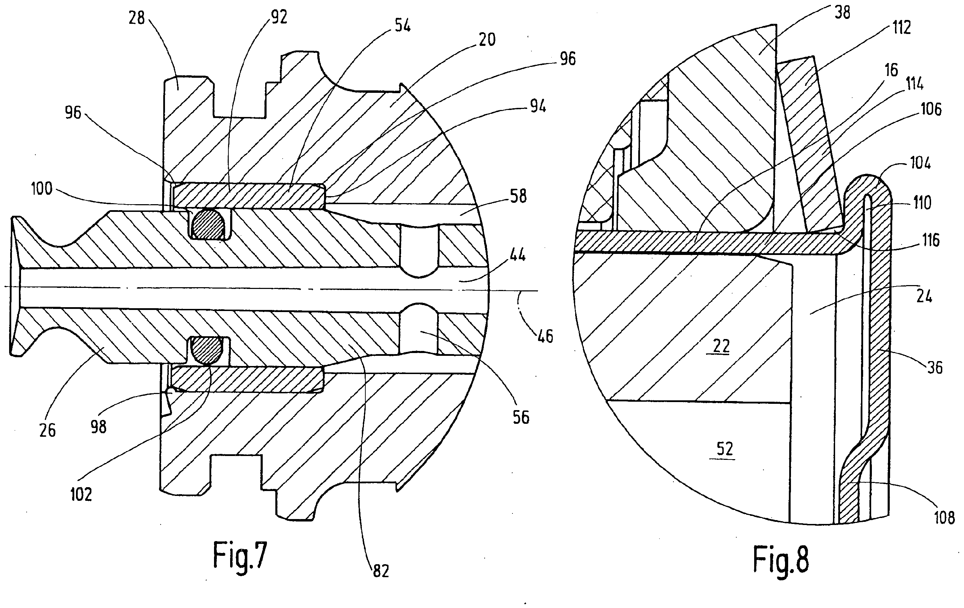

Die Darstellung nach der Fig.7 zeigt die Betätigungsvorrichtung mit der Dichtungsstelle 54, die den Mittenraum 58 gegenüber dem freien Umgebungsraum nach außen hin abdichtet, in den das freie Ende des Betätigungsteils 26 hineinragt. Die genannte Dichtungsstelle 54 ist aus einem Ringkörper 92 gebildet, der in eine absatzartige Verbreiterung 94 am freien Ende des Polkerns 20 eingesetzt, insbesondere dort eingepreßt ist. Für den dahingehenden Einpreßvorgang weist der Ringkörper 92 zu seinen beiden freien Enden hin konische Einführhilfen 96 auf. Der Ringkörper 92 ist aus einem Werkstoff mit guten Dicht- und Gleiteigenschaften gebildet, wobei neben spritzbaren Kunststoffen, wie Polyamid, auch durchaus Buntmetallmaterialien zum Einsatz kommen könnten. Sofern besonders gute Gleiteigenschaften verlangt werden, kann auch ein PTFE-Werkstoff den Ringkörper 92 ausbilden. Damit der Ringkörper 92 sicher in der Aufnahme im Polkern 20 verbleibt, kann darüber hinaus der Polkern 20 längs seines freien Innenbereiches zumindest teilweise eingebördelt werden, so dass Bördelrandabschnitte 98 nach außen hin eine wirksame Anschlagbegrenzung ausbilden. Anstelle einer abschnittsweisen Ausgestaltung kann der Bördelrand auch umlaufend ausgebildet sein.

Wie weiter die Darstellung nach der Fig.7 verdeutlicht, ist in eine Ringnut 100 ein Elastomerdichtring 102 eingebracht, der insoweit eine Abdichtung zwischen Mittenraum 58 und der freien Umgebung mit sicherstellt. Darüber hinaus ist zwischen Ringnut 100 und benachbartem Übergangsbereich 82 des Betätigungsteils 26 der Durchmesser des Betätigungsteils verbreitert und insoweit in direkter Gleitanlage mit der Innenseite des vorzugsweise als Preßhülse ausgebildeten Ringkörpers 92, was zum einen eine zusätzliche Abdichtung neben dem Elastomerdichtring 102 ergibt und im übrigen eine exakte endseitige Führung für das Betätigungsteil 26 sicherstellt entlang der Längs- oder Verfahrachse 46. Auf der abgewandten Seite zu dem Übergangsbereich 82 ist hingegen der Außendurchmesser des Betätigungsteils 26 verringert, um so einen hemmfreien Betrieb sicherzustellen und den Einfahrvorgang des Betätigungsteils 26 an der Stelle des Übergangs zum Ringkörper 92 nicht zu beeinträchtigen.

Wie insbesondere die Fig.8 in Verbindung mit der Fig.1 zeigt, ist das Polrohr 16, das in Blickrichtung auf die Figuren gesehen am rechten Rand aus dem Gehäusemantel 38 des Gehäuses 10 austritt, mit einem verbreiterten und umgelenkten Rand 104 versehen, der insoweit sich mit einem vorgebbaren axialen Abstand zu der Außenwand des Gehäusemantels 38 erstreckt. Die dahingehende Ausgestaltung bildet eine Art Loslagerstelle aus. Der insoweit gebildete Rand 104 bildet die Übergangsstelle aus zwischen der zylindrischen Polrohrwandung 106 und dem quer dazu verlaufenden Bodenteil 36. Zu seiner Mitte hin ist das Bodenteil 36 in Richtung des Ankerraums 24 mit einer Abkröpfung 108 versehen, die in einer rechten Anschlagstellung des Magnetankers 22 in dessen Freiraum 52 hineinragt. Ansonsten bildet das federelastisch nachgiebige Bodenteil 36 eine Anschlagdämpfung für den auftreffenden Magnetanker 22 aus, sofern dieser seine ganz rechte Verfahrstellung gemäß der Darstellung nach der Fig.1 einnimmt.

Der insoweit umgelegte Rand 104 begünstigt diesen Effekt durch Ausbilden einer federelastisch nachgiebigen Gelenkstelle. In den derart gebildeten Rand 104 mündet ein Umlaufspalt 110 ein, in den Medium gelangen kann, was wiederum der Aussteifung des Gesamtsystems in diesem Bereich zugute kommt. Von besonderem Vorteil ist aber, dass für das Polrohr 16 in jedem Temperaturzustand ein Toleranzausgleich geschaffen ist durch ein federelastisch nachgiebiges Rückstellmittel 112 in Form eines Energiespeichers, beispielsweise gebildet aus Bestandteilen einer Tellerfeder 114, von der in der Fig.8 ein Segmentteil dargestellt ist. Anstelle einer einzelnen Segment-Tellerfeder 114 gemäß der Darstellung nach der Fig.8 könnte dem Grunde nach aber auch ein Tellerfederpaket treten oder ein sonstiges Rückstellmittel, beispielsweise in Form einer üblichen Spiralfeder, die als Druckfeder wirkt. Auch könnte man an dieser Stelle einen Federbalg einsetzen oder einen vorgespannten Elastomerring, sofern dessen Einsatz aufgrund der herrschenden Temperaturen überhaupt möglich wäre.

Das Rückstellmittel 112, vorzugsweise in Form der Tellerfeder 114, greift mit seinem einen Ende wirksam an der freien Stirnseite des Gehäusemantels 38 an und stützt sich mit dem anderen freien Ende an einem Umlenkbereich 116 ab, an dem die zylindrische Polrohrwandung 106 in den vorkragenden Rand 104 übergeht. Im Hinblick auf ein hohes Maß an Korrosionsbeständigkeit ist das Polrohr 16 aus einem Edelstahlmaterial gebildet und das eingesetzte Rückstellmittel 112 hat auch noch den Vorteil, dass bei auftretenden Vibrationen an der Betätigungsvorrichtung das Polrohr 16 gegenüber dem Gehäuse 10 entkoppelt ist. Der nach rechts hin gewählte Überstand für den Rand 104 gegenüber der freien Stirnfläche des Gehäusemantels 38 ist derart gewählt, dass das jeweilige Rückstellmittel 112 mit seiner Vorspannung sicher am Polrohr 16 angreifen kann und dass dieses dennoch Bauraum sparend an dem sonstigen Gehäuse 10 anordenbar ist. Die genannte Abkröpfung 108 stellt darüber hinaus sicher, dass das Polrohr 16 in seinem dahingehenden Bodenteilbereich 36 verstärkt ist, so dass es bei einem etwaigen Anschlagen des Magnetankers 22 nicht zu bleibenden Verformungen kommen kann.

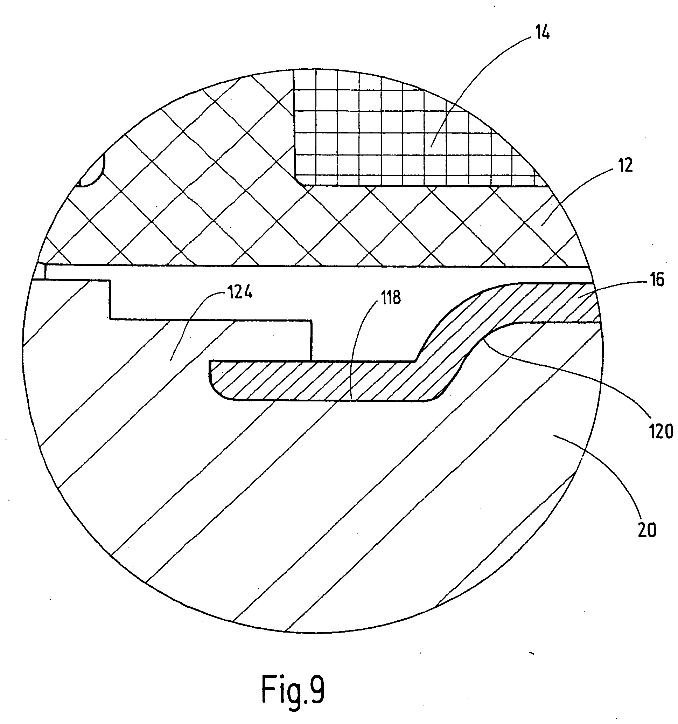

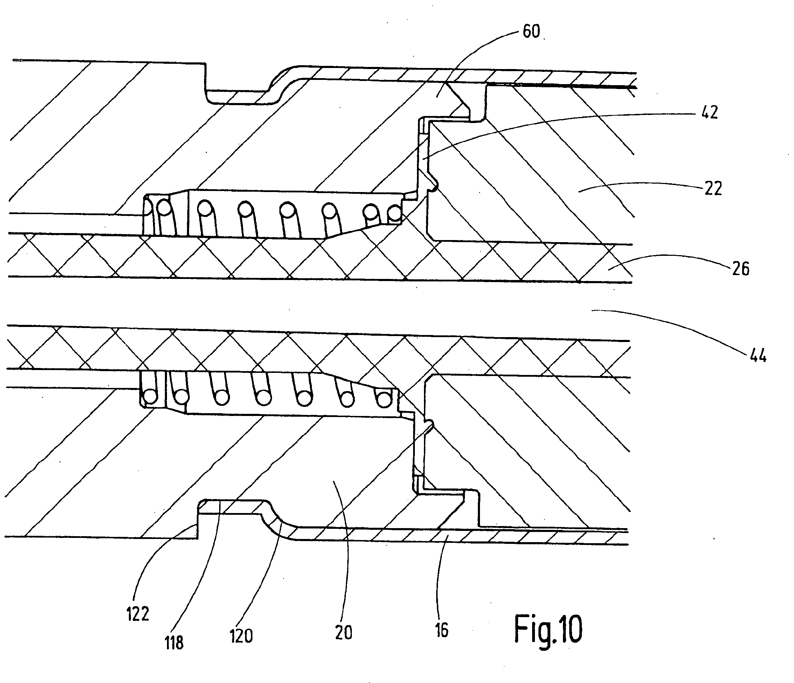

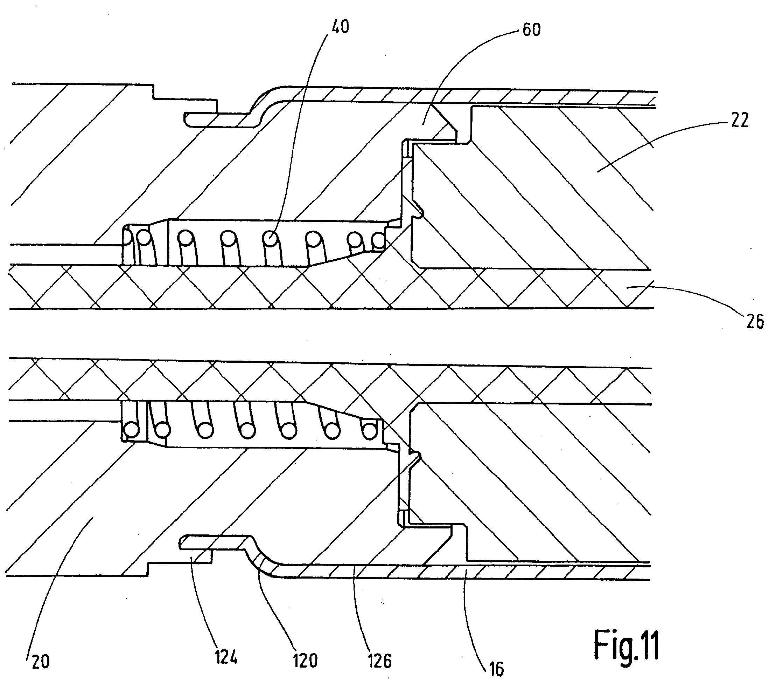

Die Lösung nach den Fig.9 bis 11 zeigt nun noch die linke Anbindungsstelle des Polrohres 16 am stationär angeordneten Polkern 20 in der Art einer Festlagerstelle. Hierfür weist der Polkern 20 in Richtung seines Ringvorsprunges 60 eine ringnutartige Verengungsstelle 118 auf, die in einem bogenförmigen Übergangsbereich 120 in den sonstigen Außendurchmesser des Polrohres 20 in Richtung des Ringvorsprunges 60 übergeht (vgl. Fig.1). Fig. 10 zeigt dabei, dass der dem bogenförmigen Übergangsbereich 120 abgewandte stufenförmige Übergangsbereich 122 zunächst unverformt ist und insoweit nur einen Anstoßbereich für das freie Ende des insoweit eingestemmten oder eingebördelten freien Endrandes des Polrohres 16 bildet. Ist dieser Herstellschritt insoweit vollzogen, wird gemäß der Darstellung nach der Fig.11 in einem zweiten Herstellschritt der stufenförmige Übergangsbereich 122 nach innen verstemmt, und zwar entlang einer Stemmfläche 124, die gegenüber dem sonstigen Außendurchmesser des Polkerns 20 in Richtung zur Polplatte 34 abgesetzt ist. Derart ist das freie Ende des Polrohres 16 von beiden Seiten her durch das in diesem Bereich verstemmte Polkernmaterial nicht nur axial und radial festgelegt, sondern auch gasdicht gehalten, d.h. die hier aufgezeigte Lösung kommt ohne zusätzliche Elastomerdichtung oder einem sonstigen Dichtsystem zwischen Polkern 20 im Bereich seines Ringvorsprunges 60 und der Festlegestelle am freien Endrand des Polrohres 16 aus.

Da die dahingehenden Betätigungsvorrichtungen auch teilweise im Hochtemperaturbereich eingesetzt werden, was grundsätzlich das Elastomermaterial von Dichtungen schädigt, ist insoweit eine kostengünstige Abdichtungsalternative realisiert. Durch den bogenförmigen Übergangsbereich 120 ist darüber hinaus das Polrohr ohne größere Knickstellen in Richtung des Ringvorsprunges 60 am Außenumfang des Polrohres 22 sicher geführt, so dass auch insoweit keine unnötige Materialbeanspruchung für das dünnwandige Polrohrmaterial auftritt. Im Hinblick auf diese Führungsstrecke 126 und die Führungszentrierung über das Rückstellmittel 112 am freien Endbereich des Polrohres 16 ist sichergestellt, dass es nicht zu Beulvorgängen kommt, die gegebenenfalls die freie Bewegbarkeit des Magnetankers 22 mit seinem Betätigungsteil 26 einschränken könnten.

Die erfindungsgemäße Betätigungsvorrichtung ist insbesondere im Niederdruckbereich für den Einsatzbereich bei Pneumatik-Ventilen auch im Hochtemperaturbereich bestimmt; bei entsprechender Modifizierung sind aber auch andere Anwendungen, insbesondere bei Hydraulikventilen, denkbar. Die sehr leichtgewichtige Betätigungsvorrichtung weist sehr kurze Schaltund Reaktionszeiten auf und es lassen sich ausgesprochen hohe Lastwechsel erreichen, die im mehrstelligen Millionenbereich liegen können.

## Patentansprüche

1. Betätigungsvorrichtung, insbesondere zum Betätigen von außenseitig anschließbaren Ventilen, mit einem Gehäuse (10) und einem darin angeordneten Spulenkörper (12) mit Spulenwicklung (14), der zumindest teilweise ein Polrohr (16) umfaßt, an dessen einem freien Ende sich ein Polkern (20) anschließt, mit einem zumindest im Polrohr (16) innerhalb eines Ankerraumes (24) längsverfahrbar geführten Magnetanker (22), der mit einem Betätigungsteil (26) für das Betätigen des jeweiligen Ventilteils zusammenwirkt, wobei das Betätigungsteil (26) zumindest teilweise aus einem spritzbaren Material gebildet ist, das in einem Verbindungsbereich (64) an den Magnetanker (22) angespritzt ist, wobei an der Stirnseite des Magnetankers (22), die dem Polkern (20) zugewandt ist, eine Antihafteinrichtung (42), insbesondere in Form einer Antihaftscheibe, angeordnet ist, **dadurch gekennzeichnet, dass** die Antihafteinrichtung (42) zumindest teilweise eine Anlagefläche für das eine Ende eines Kraftspeichers (40) ausbildet, der mit seinem anderen Ende sich am Polkern (20) abstützt oder dass zwischen der Antihafteinrichtung (42) und dem Umfang des Betätigungsteils (26) eine ringförmige Anlagestufe (80) für den Angriff des genannten Kraftspeichers (40)-angeordnet ist.

2. Betätigungsvorrichtung nach Anspruch 1, **dadurch gekennzeichnet, dass** das spritzbare Material des Betätigungsteils (26) aus einem Kunststoff, insbesondere aus einem thermoplastischen Kunststoff, besteht.

3. Betätigungsvorrichtung nach Anspruch 1 oder 2, **dadurch gekennzeichnet, dass** das Betätigungsteil (26) stangenartig ausgebildet ist und in jeder Verfahrstellung des Magnetankers (22) mit seinem freien Ende über die Betätigungsvorrichtung vorsteht und im Bereich dieses freien Endes in einem Ringkörper (92) geführt ist, der eine Dichtungsstelle (54) bildet und der in eine Verbreiterung (94) im Bereich des freien Endes des Polkernes (20) eingesetzt ist.

4. Betätigungsvorrichtung nach einem der Ansprüche 1 bis 3, **dadurch gekennzeichnet, dass** das Betätigungsteil (26) von einem Mittenkanal (44) durchgriffen ist, der an den beiden gegenüberliegenden Stirnseiten (48,50) des Betätigungsteils (26) in die Umgebung mündet.

5. Betätigungsvorrichtung nach Anspruch 4, **dadurch gekennzeichnet, dass** der Mittenkanal (44) mindestens einen Querkanal (56) aufweist, der in einen Mittenraum (58) austritt, der gegenüber der Umgebung abgedichtet ist.

6. Betätigungsvorrichtung nach einem der Ansprüche 1 bis 5, **dadurch gekennzeichnet, dass** das Betätigungsteil (26) eine Mittenöffnung (74) des Magnetankers (22) durchgreift, die von Anlageflächen des Magnetankers (22) begrenzt ist, die voneinander beabstandet zumindest teilweise Anspritzflächen (68,78) für das Betätigungsteil (26) ausbilden.

7. Betätigungsvorrichtung nach einem der Ansprüche 1 bis 6, **dadurch gekennzeichnet, dass** die Antihafteinrichtung (42) an einer Anspritzfläche (68) des Magnetankers (22) an diesen angespritzt ist.

8. Betätigungsvorrichtung nach Anspruch 7, **dadurch gekennzeichnet, dass** die zwischen Polkern (20) und Magnetanker (22) angeordnete Anspritzfläche (68) mindestens eine Vertiefung (70) im Magnetanker (22) aufweist, die vorzugsweise eine Hinterschnittgestaltung (72) ausbildet.

9. Betätigungsvorrichtung nach einem der Ansprüche 6 bis 8, **dadurch gekennzeichnet, dass** die Antihafteinrichtung (42) einstückiger Bestandteil des Betätigungsteils (26) ist, die sich flanschartig vom Betätigungsteil (26) radial nach außen erstreckt.

## Claims

1. An actuation device, in particular for actuating valves that can be connected externally, comprising a housing (10) and a coil body (12) arranged therein and having a coil winding (14) which at least partially encloses a pole tube (16) having a pole core (20) connected at the free end thereof, further comprising an armature (22) that is guided in a longitudinally displaceable manner at least in the pole tube (16) within an armature chamber (24) and interacts with an actuation part (26) for actuating the respective valve part, the actuation part (26) being formed at least partially of an injection mouldable material that is moulded in a connection region (64) to the armature (22), an anti-adhesion device (42), in particular in the form of an anti-adhesion disc, being disposed on the front face of the armature (22) facing the pole core (20), **characterised in that** the anti-adhesion device (42) at least partially forms a contact surface for the one end of an energy store (40) which is supported by its other end on the pole core (20), or that an annular support step (80) for engagement of the aforementioned energy store (40) is disposed between the anti-adhesion device (42) and the circumference of the actuation part (26).

2. The actuation device according to Claim 1, **characterised in that** the injection mouldable material of the actuation part (26) is made of a plastic, in particular of a thermoplastic.

3. The actuation device according to Claim 1 or 2, **characterised in that** the actuation part (26) is made like a rod and in each travel position of the armature (22) projects with its free end over the actuation device and in the region of this free end is guided within an annular body (92) which forms a sealing point (54) and which is inserted into a widening (94) in the region of the free end of the pole core (20).

4. The actuation device according to any of Claims 1 to 3, **characterised in that** a central channel (44) passes through the actuation part (26), which central channel opens out into the surrounding area on both opposing front faces (48, 50) of the actuation part (26).

5. The actuation device according to Claim 4, **characterised in that** the central channel (44) has at least one transverse channel (56) which passes out into a central chamber (58) which is sealed off from the surrounding area.

6. The actuation device according to any of Claims 1 to 5, **characterised in that** the actuation part (26) passes through a central opening (74) in the armature (22) which is delimited by contact surfaces of the armature (22) which, spaced apart from one another, at least partially form moulding surfaces (68, 78) for the actuation part (26).

7. The actuation device according to any of Claims 1 to 6, **characterised in that** the anti-adhesion device (42) on a moulding surface (68) of the armature (22) is moulded onto the latter.

8. The actuation device according to Claim 7, **characterised in that** the moulding surface (68) disposed between the pole core (20) and the armature (22) has at least one depression (70) in the armature (22) which preferably forms an undercut form (72).

9. The actuation device according to any of Claims 6 to 8, **characterised in that** the anti-adhesion device (42) is a one-piece component part of the actuation part (26) which extends radially outwards like a flange from the actuation part (26).

## Revendications

1. Dispositif d'actionnement, notamment pour actionner des soupapes pouvant être raccordées du côté extérieur, comprenant un boîtier (10) et un corps (12) de bobine à enroulement (14), qui y est disposé et qui entoure, au moins en partie, un tube (16) polaire à l'une des extrémités libres duquel se raccorde un noyau (20) polaire, comprenant une armature (22) magnétique guidée avec possibilité de se déplacer longitudinalement au moins dans le tube (16) polaire au sein d'un espace (24) d'armature, cette armature coopérant avec une partie (26) d'actionnement de la partie de soupape, dans lequel la partie (26) d'actionnement est, au moins en partie, en une matière pouvant être moulée par injection, qui, dans une région (64) de liaison, est injectée sur l'armature (22) magnétique, dans lequel, du côté frontal de l'armature (22) magnétique, qui est tourné vers le noyau (20) polaire, est disposé un dispositif (42) d'antiadhérence, notamment sous la forme d'une rondelle d'antiadhérence, **caractérisé en ce que** le dispositif (42) d'antiadhérence constitue, au moins en partie, une surface d'application d'une extrémité d'un accumulateur (40) d'énergie, qui s'appuie par son autre extrémité sur le noyau (20) polaire ou **en ce que**, entre le dispositif (42) d'antiadhérence et le pourtour de la partie (26) d'actionnement, est disposé un gradin (80) annulaire d'application pour l'application dudit accumulateur (40) d'énergie.

2. Dispositif d'actionnement suivant la revendication 1, **caractérisé en ce que** la matière pouvant être moulée par injection de la partie (26) d'actionnement est une matière plastique, notamment une matière plastique thermoplastique.

3. Dispositif d'actionnement suivant la revendication 1 ou 2, **caractérisé en ce que** la partie (26) d'actionnement est constituée sous la forme d'une tige et, en chaque position de déplacement de l'armature (22) magnétique, dépasse, par son extrémité libre, du dispositif d'actionnement et est guidée dans la région de cette extrémité libre dans une pièce (92) annulaire, qui forme un point (54) d'étanchéité et qui est insérée dans un élargissement (94) dans la région de l'extrémité libre du noyau (20) polaire.

4. Dispositif d'actionnement suivant l'une des revendications 1 à 3, **caractérisé en ce que** la partie (26) d'actionnement est traversée par un conduit (44) médian, qui débouche à l'atmosphère sur les deux côtés (48, 50) frontaux opposés de la partie (26) d'actionnement.

5. Dispositif d'actionnement suivant la revendication 4, **caractérisé en ce que** le conduit (44) médian a au moins un conduit (56) transversal sortant dans un espace (58) médian rendu étanche par rapport à l'atmosphère.

6. Dispositif d'actionnement suivant l'une des revendications 1 à 5, **caractérisé en ce que** la partie (26) d'actionnement traverse une ouverture (74) médiane de l'armature (22) magnétique, qui est délimitée par des surfaces d'application de l'armature (22) magnétique, lesquelles, en étant à distance l'une de l'autre, constituent, au moins en partie, des surfaces (68, 78 de moulage par injection de la partie (26) d'actionnement.

7. Dispositif d'actionnement suivant l'une des revendications 1 à 6, **caractérisé en ce que** le dispositif (42) d'antiadhérence est moulé par injection sur une surface (68) de moulage par injection de l'armature (22) magnétique.

8. Dispositif d'actionnement suivant la revendication 7, **caractérisé en ce que** la surface (68) de moulage par injection disposée entre le noyau (20) polaire et l'armature (22) magnétique a au moins une cavité (70) dans l'armature (22) magnétique, qui forme de préférence une conformation (72) en contre-dépouille.

9. Dispositif d'actionnement suivant l'une des revendications 6 à 8, **caractérisé en ce que** le dispositif (42) d'antiadhérence fait partie d'une seule pièce de la partie (26) d'actionnement, qui s'étend radialement vers l'extérieur de la partie (26) d'actionnement à la manière d'une bride.
